# EUROPEAN PATENT SPECIFICATION

(11) **EP 4 063 038 B1**
(45) Date of publication and mention of the grant of the patent: **27.08.2025**
(21) Application number: 21890535.4
(22) Date of filing: 19.04.2021
(51) Int. Cl.: B21D 41/02, B29C 57/04

(54) **PIPE FLARING DEVICE**
ROHRAUFWEITUNGSVORRICHTUNG
DISPOSITIF D'ÉVASEMENT DE TUYAU

(30) Priority: 12.11.2020 CN 202022608653 U
(43) Date of publication of application: 28.09.2022
(73) Proprietor: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528100 (CN)
(72) Inventor: CAO, Huijian, Foshan, Guangdong 528100 (CN); LIN, Xiyong, Foshan, Guangdong 528100 (CN); DIAO, Zhenbin, Foshan, Guangdong 528100 (CN); HE, Wangzhi, Foshan, Guangdong 528100 (CN)
(74) Representative: Hautier IP - MC/EP
(86) International application number: PCT/CN2021/088128
(87) International publication number: WO 2022/100000

(56) References cited:
- CN-A- 103 878 259
- CN-A- 110 154 369
- CN-A- 112 475 068
- CN-U- 204 977 432
- CN-U- 208 912 894
- CN-U- 210 305 402
- DE-A1- 102013 105 481
- DE-A1- 19 843 560
- JP-A- 2017 170 509
- US-A1- 2017 056 954
- US-A1- 2019 001 393
- US-A1- 2019 283 106

## Description

### Technical Field

The present application relates to the technical field of processing pipes, and in particular to a pipe flaring device.

### Background Art

In the process of connecting pipes, it may be necessary to perform a flaring operation on the pipe. At present, the flaring tool used is a split flaring tool. When the split flaring tool is used to flare the port of the pipe, each flaring chip on the split flaring tool will abut against the inner wall of the pipe, so as to realize the flaring of the pipe. However, when the split flaring tool is flaring, there is a gap between two adjacent flaring chips, so that the force acting on the inner wall of the pipe is uneven during flaring, resulting in the uneven force on the inner wall of the pipe, which causes that the roundness of the inner hole of the pipe after flaring is not enough, and many indentations are produced. Examples of flaring tools are disclosed in the following documents: DE 10 2013 105481 A1, US 2017/056954 A1, which forms the basis for the preamble of claim 1, US 2019/001393 A1, US 2019/283106 A1, CN 204 977 432 U.

### Summary

Based on this, it is necessary to provide a pipe flaring device, as for the problem of uneven force on the inner wall of the pipe during flaring.

A pipe flaring device is provided. The pipe flaring device comprises: an installation housing, a transmission mechanism, a flaring bulge ring and an introduction mechanism, wherein the installation housing is provided with a flaring cavity allowing a pipe to be inserted, the introduction mechanism is located in the flaring cavity, the flaring bulge ring is sleeved over the introduction mechanism, the introduction mechanism is connected with the transmission mechanism, the transmission mechanism is configured to drive the introduction mechanism to move in the flaring cavity, the introduction mechanism is configured to extend into the pipe, and the flaring bulge ring is configured for circumferentially abutting against a port of the pipe.

According to the invention, the transmission mechanism comprises a supporting seat, a transmission rod, a force-applying assembly and a connecting assembly, wherein the supporting seat is provided with a guide sleeve, the guide sleeve is installed in the flaring cavity, the supporting seat and the installation housing are installed and cooperated with each other, and the transmission rod has one end which is connected with the force-applying assembly through the connecting assembly, and the other end which passes through the guide sleeve to be connected with the introduction mechanism.

According to the invention, the introduction mechanism comprises a protection cover, a pipe-gripping sleeve and a first elastic abutting member, wherein the pipe-gripping sleeve is connected with the guide sleeve, the first elastic abutting member is movably connected with the pipe-gripping sleeve, a plurality of fixing tooth slots are provided on a side wall of the pipe-gripping sleeve along a circumferential direction of the pipe-gripping sleeve, fixing teeth corresponding to the fixing tooth slots are provided on the first elastic abutting member along a circumferential direction of the first elastic abutting member, the first elastic abutting member is configured for elastically abutting against the transmission rod, and the protection cover is sleeved over the first elastic abutting member.

In one of the embodiments, the introduction mechanism further comprises a first flaring seat, the transmission mechanism further comprises a first fastener, the flaring bulge ring is mounted on the first flaring seat, the first flaring seat is movably sleeved over the guide sleeve, a strip-shaped opening is provided on the guide sleeve in an axial direction of the guide sleeve, a first fixing hole which is fixedly cooperated with the first fastener is provided on the first flaring seat, the transmission rod is provided with a second fixing hole which is fixedly cooperated with the first fastener, the second fixing hole is positionally corresponding to the strip-shaped opening, and the first flaring seat is fixedly cooperated with the transmission rod by means of the first fastener.

In one of the embodiments, the introduction mechanism further comprises a second flaring seat, a plurality of fixing members are arranged on the second flaring seat at intervals along a circumferential direction of the second flaring seat, the supporting seat is provided with an amounting hole allowing the fixing member to pass through, the flaring bulge ring is mounted on the second flaring seat, the second flaring seat is movably sleeved over the guide sleeve, and the fixing member is fixedly cooperated with the connecting assembly.

In one of the embodiments, the introduction mechanism comprises a buffer sleeve, a second elastic abutting member and a buffer ring, wherein the second elastic abutting member is movably connected with the guide sleeve, the second elastic abutting member is configured for elastically abutting against the transmission rod, the buffer sleeve and the buffer ring are both sleeved on the second elastic abutting member, and both the buffer sleeve and the buffer ring are configured to abut against a pipe wall of the pipe.

In one of the embodiments, the pipe flaring device further comprises a first positioning seat, wherein the first positioning seat is installed inside the installation housing, an end surface of the first positioning seat is configured to abut against a port of the pipe, the first positioning seat is provided with a first adapting port allowing the introduction mechanism to pass therethrough, an end of the first positioning seat is provided with a first abutting portion, the installation housing is provided with a second abutting portion that abuts and cooperates with the first abutting portion, wherein after the supporting seat and the installation housing are fixed by sleeving, one surface of the first abutting portion and the supporting seat abut against each other, and the other surface of the first abutting portion and the second abutting portion abut against each other.

In one of the embodiments, the pipe flaring device further comprises a second positioning seat, wherein the second positioning seat is installed inside the installation housing, an end surface of the second positioning seat is configured to abut against a port of the pipe, the second positioning seat is provided with a second adapting port allowing the introduction mechanism to pass therethrough, the second positioning seat is provided with a limiting member, a first thread is provided along a circumferential direction of the installation housing, a second thread is provided along a circumferential direction of the second positioning seat, the supporting seat is provided with a limiting opening adapted to the limiting member, the limiting member passes through the limiting opening along an axial direction of the installation housing and is connected with the connection assembly, and the first thread is threadedly matched with the second thread.

In one of the embodiments, a scale mark hole for measuring a depth position of the second positioning seat in the installation housing is provided along an axial direction of the installation housing.

In one of the embodiments, the force-applying assembly comprises a first force-applying arm, a second force-applying arm, a rotating member and a force transmission member, wherein the first force-applying arm and the second force-applying arm are rotatably cooperated with each other by means of the rotating member, the first force-applying arm is fixedly cooperated with the supporting seat, the first force-applying arm is provided with an assembling hole, and the force transmission member has one end connected with the second force-applying arm, and the other end which is connected with the connecting assembly through the assembling hole.

Meanwhile, when the above-mentioned pipe flaring device is being used, the diameter of the end of the introduction mechanism is determined according to the diameter of the end of the pipe, that is, it ensures that the introduction mechanism can be smoothly inserted into the pipe. Then, according to the flaring requirement, the protruding diameter of the flaring bulge ring on the introduction mechanism is determined, that is, after the flaring bulge ring abuts against the port of the pipe, the size of the port of the pipe can be directly expanded to the preset port size. Further, by adjusting the transmission mechanism, the introduction mechanism and the flaring bulge ring will move toward the direction of inserting into the pipe, and the introduction mechanism will be inserted into the pipe before the flaring bulge ring. The introduction mechanism continues moving after being inserted into the pipe, until the flaring bulge ring is circumferentially abutting against the port of the pipe. At this time, the introduction mechanism moves in the pipe, which can avoid the dislocations of the flaring bulge ring and the port of the pipe. In addition, compared with the traditional split flaring tool, the above-mentioned pipe flaring device utilizes the flaring bulge ring to achieve uniform circumferential abutting against the port of the pipe, and that is, it ensures that the pipe is subjected to uniform force during flaring.

### Brief Description of Drawings

FIG. 1 is a schematic diagram of an exploded structure of the pipe flaring device according to an embodiment.
FIG. 2 is a schematic diagram of an exploded structure of the pipe flaring device according to another embodiment.
FIG. 3 is a sectional view of the pipe flaring device according to an embodiment.
FIG. 4 is a sectional view of the pipe flaring device according to another embodiment.
FIG. 5 is a schematic structural diagram of the pipe flaring device according to an embodiment before force is applied; and
FIG. 6 is a schematic structural diagram of the pipe flaring device according to an embodiment when force is being applied.

100, installation housing; 110, flaring cavity; 120, second abutting portion; 130, scale mark hole; 200, transmission mechanism; 210, supporting seat; 211, guide sleeve; 212, strip-shaped opening; 213, assembling hole; 214, limiting opening; 215, rubber ring; 220, transmission rod; 221, adapting seat; 230, force-applying assembly; 231, first force-applying arm; 232, second force-applying arm; 233, rotating member; 234, force transmission member; 240, connecting assembly; 241, first connecting seat; 242, second connecting seat; 243, third connecting seat; 2431, mounting slot; 244, first clip; 245, second clip; 246, first spring; 247; second spring; 248, second fastener; 249, third fastener; 250, first fastener; 300, flaring bulge ring; 400, introduction mechanism; 410, protection cover; 420, pipe-gripping sleeve; 421, fixing tooth slot; 430, first elastic abutting member; 431, fixing tooth; 440, first flaring seat; 441, fixing ring; 450, second flaring seat; 451, fixing member; 460, buffer sleeve; 470, second elastic abutting member; 480, buffer ring; 500, first positioning seat; 510, first adapting port; 520, first abutting portion; 600, second positioning seat; 610, second adapting port; and 620, limiting member.

### Detailed Description of Embodiments

In order to make the above objects, features and advantages of the present application more understandable, the embodiments of the present application will be described in detail below with reference to the drawings. In the following description, numerous specific details are set forth in order to provide a thorough understanding on the present application. However, the present application can be implemented in many other ways than those described herein, and those skilled in the art should understand that the technical solutions described in the foregoing embodiments can be modified.

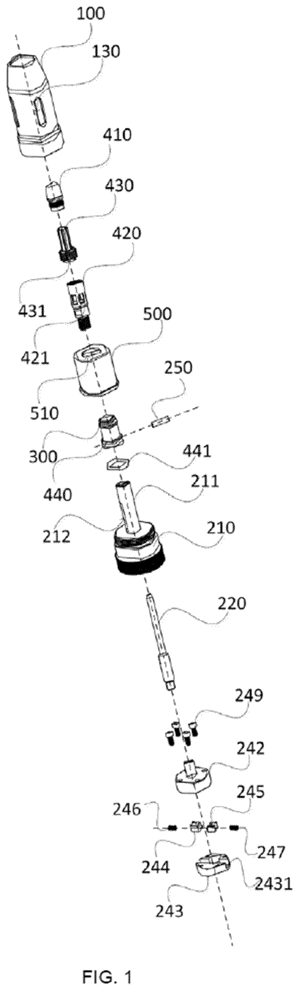

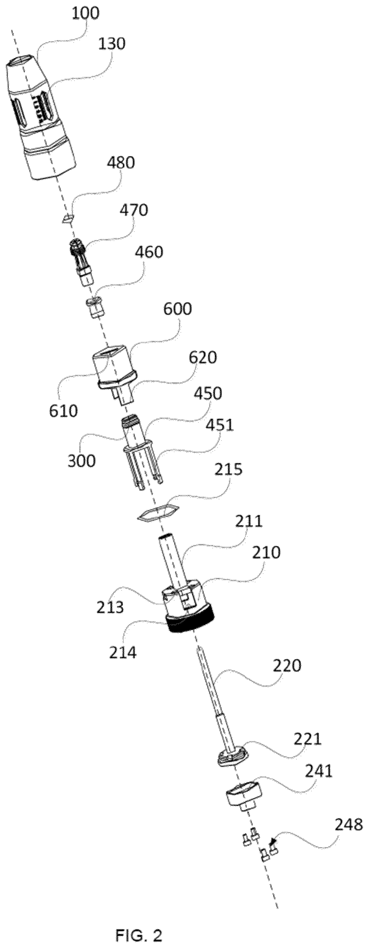

Referring to FIG. 1 and FIG. 2, in one embodiment, the pipe flaring device comprises: an installation housing 100, a transmission mechanism 200, the flaring bulge ring 300 and the introduction mechanism 400. The installation housing 100 is provided with a flaring cavity 110 allowing the pipe to be inserted. The introduction mechanism 400 is located in the flaring cavity 110, the flaring bulge ring 300 is sleeved over (outside) the introduction mechanism 400. The introduction mechanism 400 is connected with the transmission mechanism 200, and the transmission mechanism 200 is configured to drive the introduction mechanism 400 to move in the flaring cavity 110, the introduction mechanism 400 is configured to extend into the pipe, and the flaring bulge ring 300 is configured to circumferentially abut against the port of the pipe.

At the same time, when the above-mentioned pipe flaring device is being used, the end size of the introduction mechanism 400 is determined according to the diameter of the end of the pipe, that is, it ensures that the introduction mechanism 400 can be smoothly inserted into the pipe. Then, according to the flaring requirements, the protruding diameter of the flaring bulge ring 300 on the introduction mechanism 400 is determined, such that after the flaring bulge ring 300 abuts against the port of the pipe, the size of the port of the pipe can be directly expanded to the preset port size. Further, by adjusting the transmission mechanism 200, the introduction mechanism 400 and the flaring bulge ring 300 will move toward the direction of inserting into the pipe, and the introduction mechanism 400 will be inserted into the pipe before the flaring bulge ring 300. After the introduction mechanism 400 is inserted into the pipe, the introduction mechanism 400 will continue moving until the flaring bulge ring 300 circumferentially abuts against the port of the pipe, and at this time, the introduction mechanism 400 moves in the pipe, which can avoid the misalignment of the flaring bulge ring 300 and the port of the pipe. In addition, compared with the traditional split flaring tool, the above-mentioned pipe flaring device utilizes the flaring bulge ring 300 to realize the uniform circumferential abutting against the pipe port, and that is, it ensures uniform force acting on the pipe during flaring.

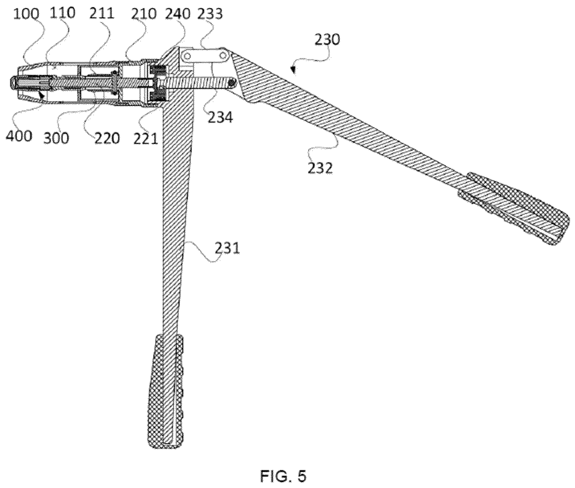

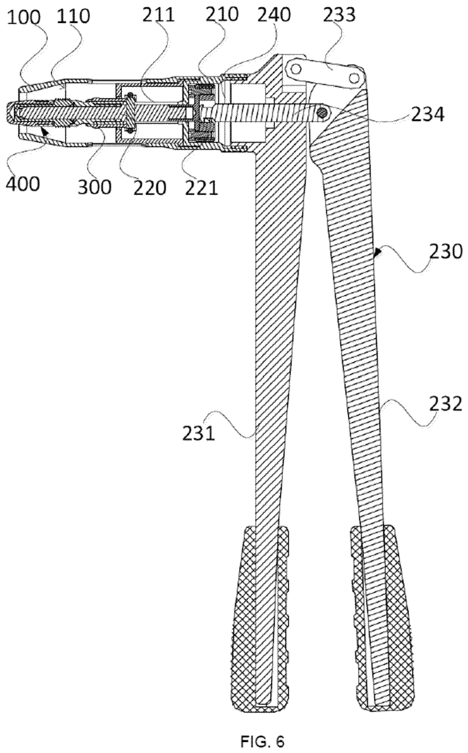

Referring to FIG. 1 and FIG. 2, in one embodiment, the transmission mechanism 200 comprises a supporting seat 210, a transmission rod 220, a force-applying assembly 230 and the connecting assembly 240. The supporting seat 210 is provided with a guide sleeve 211, and the guide sleeve 211 is installed in the flaring cavity 110, and the supporting seat 210 and the installation housing 100 are installed and cooperated with each other. The transmission rod 220 has one end which is connected with the force-applying assembly 230 via the connecting assembly 240, and the other end passing through the guide sleeve 211 to be connected with the introduction mechanism 400. Referring to FIG. 5 and FIG. 6, the force-applying assembly 230 comprises a first force-applying arm 231, a second force-applying arm 232, a rotating member 233 and the force transmission member 234, wherein the first force-applying arm 231 and the second force-applying arm 232 are rotatably cooperated through the rotating member 233, the first force-applying arm 231 and the supporting seat 210 are fixedly cooperated. The first force-applying arm 231 is provided with an assembling hole. One end of the force transmission member 234 is connected with the second force-applying arm 232, and the other end of the force transmission member 234 is connected with the connecting component 240 through the assembling hole.

Specifically, the rotating member 233 comprises a connecting rod and a rotating shaft, that is, both ends of the connecting rod realize the rotating cooperation between the rotating member 233 and the first force-applying arm 231 and the rotating cooperation between the rotating member 233 and the second force-applying arm 232, through the rotating shaft. The force transmission member 234 is a force transmission post or force transmission rod. The guide sleeve 211 is installed on one of end surfaces of the supporting seat 210, and the supporting seat 210 and the installation housing 100 can be connected and fixed using bolts or screws, and the supporting seat 210 and the installation housing 100 can also be fixed through snap-fit and snapping groove, or the supporting seat 210 and the installation housing 100 are movably cooperated with each other.

Further, the connecting assembly 240 can comprise a first connecting seat 241, and the first connecting seat 241 is connected with the transmission rod 220. In order to ensure the installation stability of the connecting seat and the transmission rod 220, an adapting seat 221 can be additionally provided on the transmission rod 220, that is, the first connecting seat 241 is sleeved on the adapting seat 221, and at the same time, it can be fixed by means of a second fastener 248 (bolt or screw). The first connecting seat 241 is provided with a snapping groove, and the end of the force transmission member 234 is provided with a snapping ring or a snap-fit adapting to the snapping groove. At this time, the first force-applying arm 231 and the supporting seat 210 are threadedly fixed. By changing the opening-and-closing angle of the first force-applying arm 231 and the second force-applying arm 232, it is achieved that the transmission rod 220 moves inside the guide sleeve 211. This is merely one example, e.g., connecting assembly 240 can comprise a third fastener 249, a second connecting seat 242, a third connecting seat 243, a first clip 244, a second clip 245, the first spring 246 and the second spring 247, wherein the third fastener 249 is a bolt or screw. The end of the transmission rod 220 is provided with a first connecting thread, and a second connecting thread matched with the first connecting thread is provided on the second connecting seat 242. The transmission rod 220 is fixedly cooperated with the second connecting seat 242, and the third connecting seat 243 and the second connecting seat 242 are fixed through a third fastener 249. The third connecting seat 243 is provided with a mounting slot 2431, and both the first clip 244 and the second clip 245 can be installed in the mounting slot 2431. After the third connecting seat 243 and the second connecting seat 242 are installed and fixed, the second connecting seat 242 will block openings of two ends of the mounting slot 2431. At this time, the first clip 244 abuts against one of the ports of the mounting slot 2431 through the first spring 246. The second clip 245 abuts against another port of the mounting slot 2431 through the second spring 247. The third connecting seat 243 is provided with a mounting opening allowing the force transmission member 234 to be inserted. After the force transmission member 234 is inserted into the third connecting seat 243 through the mounting opening, the first clip 244 and the second clip 245 will elastically abut against the force transmission member 234, thereby realizing the connection and fixation between the connection assembly 240 and the force-applying assembly 230.

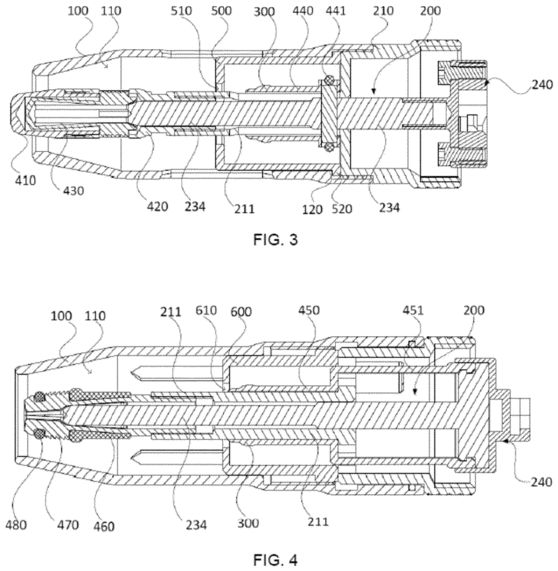

Referring to FIG. 1 and FIG. 3, in one embodiment, the introduction mechanism 400 comprises a protection cover 410, a pipe-gripping sleeve 420 and a first elastic abutting member 430. The pipe-gripping sleeve 420 is connected with the guide sleeve 211, and the first elastic abutting member 430 is movably connected with the pipe-gripping sleeve 420. A plurality of fixing tooth slots 421 are arranged on the side wall of the pipe-gripping sleeve 420 along the circumferential direction of the pipe-gripping sleeve 420, and the fixing teeth 431 corresponding to the fixing tooth slots 421 are provided on the first elastic abutting member 430 along the circumferential direction of the first elastic abutting member 430. The first elastic abutting member 430 is used for elastically abutting against the transmission rod 220, and the protection cover 410 is sleeved over the first elastic abutting member 430. Specifically, the protection cover 410 is a rigid cover. The first elastic abutting member 430 is an elastic cover, or the first elastic abutting member 430 comprises a plurality of elastic sheets. In this embodiment, the multiple elastic sheets are spliced around the circumferential direction of the pipe-gripping sleeve 420, and one ends of the multiple elastic sheets are fixed, and the other ends of multiple elastic sheets are inserted into the pipe-gripping sleeve 420 and movably connected with the pipe-gripping sleeve 420. When flaring the pipe, the transmission rod 220 is inserted into the first elastic abutting member 430 through the pipe-gripping sleeve 420, and at this time, the plurality of elastic sheets will elastically expand. The rigid protection cover 410 is sleeved over the first elastic abutting member 430, and then the protection cover 410 can play the role of protecting the first elastic abutting member 430. In the above-mentioned embodiment, the elastic sheets can be driven by the transmission rod 220 to expand elastically, realizing that the fixing teeth 431 can protrude from the fixing slots 421, that is, it realizes the circumferential abutting between the fixing teeth 431 and the inner wall of the pipe, and ensures that the pipe does not move when the flaring bulge ring 300 enters the port of the pipe.

Referring to FIG. 1 and FIG. 3, in one embodiment, the introduction mechanism 400 further comprises a first flaring seat 440, the transmission mechanism 200 further comprises a first fastener 250, the flaring bulge ring 300 is mounted on the first flaring seat 440, and the first flaring seat 440 is movably sleeved over the guide sleeve 211. The strip-shaped opening 212 is provided on the guide sleeve 211 along the axial direction of the guide sleeve 211. The first flaring seat 440 is provided with a first fixing hole fixedly cooperated with the first fastener 250. The transmission rod 220 is provided with a second fixing hole fixedly cooperated with the first fastener 250, and the second fixing hole is corresponding to the strip-shaped opening 212 in position. The first flaring seat 440 is fixedly cooperated with the transmission rod 220 through the first fastener 250. Specifically, the first fastener 250 is a latch. After the first flaring seat 440 is sleeved on the guide sleeve 211, the first flaring seat 440 is fixedly cooperated with the transmission rod 220 through the first fastener 250, and at the same time, the fixing ring 441 can be sleeved over a first flaring seat 440, and the fixing ring 441 covers the first fastener 250, so as to prevent the first fastener 250 from falling off from the first flaring seat 440. The long-side direction of the strip-shaped opening 212 is consistent with the movement direction of the transmission rod 220. That is, when the transmission rod 220 is moving, the transmission rod 220 can drive the first flaring seat 440 to move within the opening range of the strip-shaped opening 212, and finally is inserted into the pipe through the first flaring seat 440, and the first flaring seat 440 flares the port of the pipe through the flaring bulge ring 300. The above-mentioned embodiment can ensure that the first flaring seat 440 moves in the preset direction, so that the first flaring seat 440 can enter the pipe more smoothly. In addition, the protection cover 410 firstly abuts against the side wall of the pipe, and then the first flaring seat 440 is inserted into the pipe for flaring. This embodiment described above increases contact area between the introduction mechanism 400 and the pipe, so that the pipe is subjected to more uniform force during flaring.

Referring to FIG. 2 and FIG. 4, in one embodiment, the introduction mechanism 400 further comprises a second flaring seat 450. A plurality of fixing members 451 are provided on the second flaring seat 450 at intervals along the circumferential direction of the second flaring seat 450. The supporting seat 210 is provided with a mounting hole 213 allowing the fixing member 451 to pass through. The flaring bulge ring 300 is mounted on the second flaring seat 450. The second flaring seat 450 is movably sleeved over the guide sleeve 211. The fixing member 451 is fixedly cooperated with the connecting assembly 240. Specifically, the fixing member 451 is a protruding strip or a rod body. First, the second flaring seat 450 is sleeved over the guide sleeve 211, and then by forming in the supporting seat 210 the mounting hole 213 allowing the fixing member 451 to pass through, it realizes that the second flaring seat 450 can pass through the supporting seat 210 to be connected with the force transmission mechanism, that is, it realizes the movable cooperation between the second flaring seat 450 and the guide sleeve 211. The second flaring seat 450 is inserted into the pipe, and the second flaring seat 450 uses the flaring bulge ring 300 to flare the port of the pipe. The above-mentioned embodiment can ensure that the second flaring seat 450 moves in a preset direction, so that the second flaring seat 450 can enter the pipe more smoothly.

Referring to FIG. 2 and FIG. 4, in one embodiment, the introduction mechanism 400 includes a buffer sleeve 460, a second elastic abutting member 470 and a buffer ring 480. The second elastic abutting member 470 is movably connected with the guide sleeve 211. The second elastic abutting member 470 is used for elastically abutting against the transmission rod 220. The buffer sleeve 460 and the buffer ring 480 are both sleeved on the second elastic abutting member 470, and the buffer sleeve 460 and the buffer ring 480 are both used to abut against the pipe wall of the pipe. Specifically, the buffer sleeve 460 and the buffer ring 480 are flexible resin or rubber. The second elastic abutting member 470 is an elastic cover, or the second elastic abutting member 470 includes a plurality of elastic sheets. In this embodiment, the plurality of elastic sheets, which are around the guide sleeve 211, are spliced along the circumferential direction thereof. One ends of the plurality of elastic sheets are fixed, and the other ends of the plurality of elastic sheets are inserted into the guide sleeve 211 and movably connected with the guide sleeve 211. When the pipe is flared, the transmission rod 220 is inserted into the second elastic abutting member 470 through the guide sleeve 211, and at this time, the plurality of elastic sheets will be elastically expanded. The buffer sleeve 460 and the buffer ring 480 are disposed outside the second elastic abutting member 470, that is, the buffer sleeve can be elastically expanded along with the second elastic abutting member 470. The above-mentioned embodiment can prevent the plurality of elastic sheets from directly contacting the pipe wall of the pipe, so as to avoid forming a plurality of ribs on the inner wall of the pipe when the pipe is flared (the existence of the ribs can easily lead to cracking of the pipe). The above-mentioned buffer sleeve 460 and buffer ring 480 can play a protective effect on the second elastic abutting member. Further, both the buffer sleeve 460 and the second abutting member 470 can be integrally formed with the guide sleeve 211. That is, when the transmission rod 220 moves toward the second abutting member 470 inside the guide sleeve 211, the second abutting member 470 can be expanded in the circumferential direction under the push of the transmission rod 220, so as to realize the circumferential abutting between the second abutting member 470 and the inner wall of the pipe.

Referring to FIG. 1 and FIG. 3, in one embodiment, the pipe flaring device further includes a first positioning seat 500. The first positioning seat 500 is installed inside the installation housing 100. The end surface of the first positioning seat 500 is used to abut against the port of the pipe. The first positioning seat 500 is provided with a first adapting port 510 allowing the introduction mechanism 400 to pass therethrough. The end of the first positioning seat 500 is provided with a first abutting portion 520. The installation housing 100 is provided with a second abutting portion 120 that is abutted and cooperated with the first abutting portion 520. After the supporting seat 210 and the installation housing 100 are sleeved and fixed, one of surfaces of the first abutting portion 520 abuts against the supporting seat 210, and the other surface of the first abutting portion 520 and the second abutting portion 120 abut against each other. Specifically, the first abutting portion 520 on the first positioning seat 500 is an abutting plate or an annular convex ring. The second abutting portion 120 of the installation housing 100 may be a stepped groove formed directly on the installation housing 100, or a stepped groove formed by making an annular plate inserted inside the installation housing 100. Further, the first positioning seat 500 is installed inside the installation housing 100. After the installation housing 100 and the supporting seat 210 are connected and fixed to each other, one of surfaces of the first abutting portion 520 abuts against the supporting seat 210, and another surface of the first abutting portion 520 abuts against the second abutting portion 120, thereby realizing that the first positioning seat 500 is fixed inside the installation housing 100. At this time, after the pipe is inserted into the flaring cavity 110, the pipe will abut against the end surface of the first positioning seat 500, so that it is realized that the insertion depth of the pipe in the flaring cavity 110 is fixed.

Referring to FIG. 2 and FIG. 4, in one embodiment, the pipe flaring device further includes a second positioning seat 600. The second positioning seat 600 is installed inside the installation housing 100. The end surface of the second positioning seat 600 is used to abut against the port of the pipe. The second positioning seat 600 is provided with a second adapting port 610 allowing the introduction mechanism 400 to pass therethrough. The second positioning seat 600 is provided with a limiting member 620. A first thread is provided along the circumferential direction of the installation housing 100, and a second thread is provided along the circumferential direction of the second positioning seat 600. The supporting seat 210 is provided with a limiting opening 214 adapted to the limiting member 620. The limiting member 620 passes through the limiting opening 214 along the axial direction of the installation housing 100 and is connected to the connecting assembly 240, and the first thread is threadedly matched with the second thread. A scale mark hole 130 for measuring the depth position of the second positioning seat 600 in the installation housing is provided along the axial direction of the installation housing 100. Specifically, the installation housing 100 and the supporting seat 210 can rotate relative to each other. For example, a sliding chute is provided on the inner wall of the installation housing, along the circumferential direction of the inner wall of the installation housing 100, and at the same time, a threaded hole corresponding to the sliding chute is provided on the supporting seat 210. Then, a screw or bolt is used to pass through the sliding chute and be inserted into the threaded hole, and at this time, the relative rotation of the installation housing 100 and the supporting seat 210 can be realized. The limiting member 620 is a limiting plate or a limiting rod. After the limiting member 620 is inserted into the limiting opening 214, the supporting seat 210 can limit the rotation of the second positioning seat 600 inside the installation housing 100. Meanwhile, the limiting member 620 can change the depth of the limiting member 620 inserted into the limiting opening 214 along the axial direction of the installation housing 100. At this time, the installation housing 100 can be rotatably cooperated with the supporting seat 210 (for example, the installation housing 100 is directly sleeved outside the supporting seat 210, and meanwhile the installation housing 100 can rotate relative to the supporting seat 210, and at the same time, it is also possible that a rubber ring 215 is additionally installed between the installation housing 100 and the supporting seat 210, to reduce the friction between the installation housing and the supporting seat 210). With the rotation of the installation housing 100, the second positioning seat 600 will move relative to the installation housing 100 under the cooperation of the first thread and the second thread, thereby changing the distance between the second positioning seat 600 and the end of the installation housing 100. That is, the depth of the pipe inserted into the flaring cavity 110 can be changed. At the same time, by adding a scale mark hole 130 on the installation housing 100, it is possible to effectively learn the specific depth of the pipe inserted into the flaring cavity 110. That is, the above-mentioned embodiment can improve the usability of the pipe flaring device.

In the description of the present application, it should be understood that the orientation or position relationship, indicated by terms "center", "longitudinal", "lateral", "length", "width", "thickness", "upper", "lower", "front", "back", "left", "right", "vertical", " horizontal", "top", "bottom", "inner", "outer", "clockwise", "counterclockwise", "axial", "radial", "circumferential direction" and the like, are based on the orientation or position relationship shown in the drawings, and only for the convenience of describing the present application and simplifying the description, rather than indicating or implying that the device or element referred to must be in the particular orientation, or constructed and operated in the particular orientation, and therefore should not be construed as limitations on the present application.

In addition, the terms, "first" and "second", are only used for the purpose of description, and should not be construed as indicating or implying the importance of relativity or implying the number of indicated technical features. Thus, if a feature is defined by "first" or "second", it may expressly or implicitly comprise at least one feature. In the description of the present application, "plurality" means at least two, such as, two, three, etc., unless expressly and specifically defined otherwise. In this application, unless otherwise expressly specified and limited, the terms, "install", "link", "connect", "fix" and the like, should be understood in a broad sense. For example, it can be fixedly connected, detachably connected, or integrally formed. It can be mechanically connected or electrically connected. It can be directly connected or indirectly connected through an intermediate medium or can be internally communicated between two elements or it can be of interaction relationship between two elements, unless otherwise clearly defined. For those ordinarily skilled in the art, the specific meaning of the above terms in the present application can be understood according to the specific situation.

In this application, unless expressly stated and defined otherwise, when a first feature is "on" or "under" a second feature, the first and second features may be directly contacted with each other, or the first and second features are indirectly contacted with each other through an intermediate medium. Also, when the first feature is "above", "over" and "on" the second feature, it may mean that the first feature is directly above or obliquely above the second feature, or simply means that the first feature is on the level higher than that of the second feature. When the first feature is "below", "underneath" and "under" the second feature, it may mean that the first feature is directly below or obliquely below the second feature, or simply means that the first feature is on the level lower than that of the second feature.

It should be noted that when an element is referred to as being "fixed on" or "provided on" another element, it can be directly located on another element, or there may be one or more elements therebetween. When an element is referred to as being "connected" to another element, it can be directly connected to another element, or there may be one or more elements therebetween. The terms, "vertical", "horizontal", "upper", "lower", "left", "right" and similar expressions used herein, are for the purpose of illustration only, and it is not represented that the embodiment in which it is defined is unique.

## Claims

1. A pipe flaring device comprising an installation housing (100), a transmission mechanism (200), a flaring bulge ring (300) and an introduction mechanism (400), wherein the installation housing (100) is provided with a flaring cavity (110) allowing a pipe to be inserted, the introduction mechanism (400) is located in the flaring cavity (110), the introduction mechanism (400) is connected with the transmission mechanism (200), the transmission mechanism (200) is configured to drive the introduction mechanism (400) to move in the flaring cavity (110), the introduction mechanism (400) is configured to extend into the pipe, and the flaring bulge ring (300) is configured for circumferentially abutting against a port of the pipe, wherein the transmission mechanism (200) comprises a supporting seat (210), a transmission rod (220), a force-applying assembly (230) and a connecting assembly (240), wherein the supporting seat (210) is provided with a guide sleeve (211), the guide sleeve (211) is installed in the flaring cavity (110), the supporting seat (210) and the installation housing (100) are installed and cooperated with each other, and the transmission rod (220) has one end which is connected with the force-applying assembly (230) through the connecting assembly (240), and the other end which passes through the guide sleeve (211) to be connected with the introduction mechanism (400), **characterized in that** the flaring bulge ring (300) is sleeved over the introduction mechanism (400), and that the introduction mechanism (400) comprises a protection cover (410), a pipe-gripping sleeve and a first elastic abutting member (430), wherein the pipe-gripping sleeve (420) is connected with the guide sleeve (211), the first elastic abutting member (430) is movably connected with the pipe-gripping sleeve (420), a plurality of fixing tooth slots (421) are provided on a side wall of the pipe-gripping sleeve along a circumferential direction of the pipe-gripping sleeve (420), fixing teeth (431) corresponding to the fixing tooth slots (421) are provided on the first elastic abutting member (430) along a circumferential direction of the first elastic abutting member (430), the first elastic abutting member (430) is configured for elastically abutting against the transmission rod (220), and the protection cover (410) is sleeved over the first elastic abutting member (430).

2. The pipe flaring device according to claim 1, wherein the introduction mechanism (400) further comprises a first flaring seat (440), the transmission mechanism (200) further comprises a first fastener (250), the flaring bulge ring (300) is mounted on the first flaring seat (440), the first flaring seat (440) is movably sleeved over the guide sleeve (211), a strip-shaped opening (212) is provided on the guide sleeve (211) in an axial direction of the guide sleeve (211), a first fixing hole which is fixedly cooperated with the first fastener (250) is provided on the first flaring seat (440), the transmission rod (220) is provided with a second fixing hole which is fixedly cooperated with the first fastener (250), the second fixing hole is corresponding to the strip-shaped opening (212) in position, and the first flaring seat (440) is fixedly cooperated with the transmission rod (220) through the first fastener (250).

3. The pipe flaring device according to claim 1, wherein the introduction mechanism (400) further comprises a second flaring seat (450), a plurality of fixing members (451) are arranged on the second flaring seat (450) at intervals along a circumferential direction of the second flaring seat (450), the supporting seat (210) is provided with a mounting hole allowing the fixing member (451) to pass through, the flaring bulge ring (300) is mounted on the second flaring seat (450), the second flaring seat (450) is movably sleeved over the guide sleeve (211), and the fixing member (451) is fixedly cooperated with the connecting assembly (240).

4. The pipe flaring device according to claim 1, wherein the introduction mechanism (400) comprises a buffer sleeve (460), a second elastic abutting member (470) and a buffer ring (480), wherein the second elastic abutting member (470) is movably connected with the guide sleeve (211), the second elastic abutting member (470) is configured for elastically abutting against the transmission rod (220), the buffer sleeve (460) and the buffer ring (480) are both sleeved on the second elastic abutting member (470), and both the buffer sleeve (460) and the buffer ring (480) are configured to abut against a pipe wall of the pipe.

5. The pipe flaring device according to claim 1, wherein the pipe flaring device further comprises a first positioning seat (500), wherein the first positioning seat (500) is installed inside the installation housing (100), an end surface of the first positioning seat (500) is configured to abut against a port of the pipe, the first positioning seat (500) is provided with a first adapting port (510) allowing the introduction mechanism (400) to pass therethrough, an end of the first positioning seat (500) is provided with a first abutting portion (520), the installation housing (100) is provided with a second abutting portion (120) that abuts and cooperates with the first abutting portion (520), wherein after the supporting seat (210) and the installation housing (100) are fixed by sleeving, one surface of the first abutting portion (520) and the supporting seat (210) abut against each other, and the other surface of the first abutting portion (520) and the second abutting portion (120) abut against each other.

6. The pipe flaring device according to claim 1, wherein the pipe flaring device further comprises a second positioning seat (600), wherein the second positioning seat (600) is installed inside the installation housing (100), an end surface of the second positioning seat (600) is configured to abut against a port of the pipe, the second positioning seat (600) is provided with a second adapting port (610) allowing the introduction mechanism (400) to pass therethrough, the second positioning seat (600) is provided with a limiting member (620), a first thread is provided along a circumferential direction of the installation housing (100), a second thread is provided along a circumferential direction of the second positioning seat (600), the supporting seat (210) is provided with a limiting opening (214) adapted to the limiting member (620), the limiting member (620) passes through the limiting opening (214) along an axial direction of the installation housing (100) and is connected with the connection assembly, and the first thread is threadedly matched with the second thread.

7. The pipe flaring device according to claim 6, wherein a scale mark hole (130) for measuring a depth position of the second positioning seat (600) in the installation housing (100) is provided along an axial direction of the installation housing (100).

8. The pipe flaring device according to any one of claims 1 to 7, wherein the force-applying assembly (230) comprises a first force-applying arm (231), a second force-applying arm (232), a rotating member (233) and a force transmission member (234), wherein the first force-applying arm (231) and the second force-applying arm (232) are rotatably cooperated with each other through the rotating member (233), the first force-applying arm (231) is fixedly cooperated with the supporting seat (210), the first force-applying arm (231) is provided with an assembling hole (213), and the force transmission member (234) has one end connected with the second force-applying arm (232), and the other end which is connected with the connecting assembly (240) through the assembling hole (213).

## Patentansprüche

1. Rohrbördelvorrichtung, umfassend ein Installationsgehäuse (100), einen Übertragungsmechanismus (200), einen Bördelwölbungsring (300) und einen Einführungsmechanismus (400), wobei das Installationsgehäuse (100) mit einem Bördelhohlraum (110) versehen ist, in dem ein Rohr eingeführt werden kann, der Einführungsmechanismus (400) sich in dem Bördelhohlraum (110) befindet, der Einführungsmechanismus (400) mit dem Übertragungsmechanismus (200) verbunden ist, der Übertragungsmechanismus (200) so konfiguriert ist, dass er den Einführungsmechanismus (400) antreibt, um sich in dem Bördelhohlraum (110) zu bewegen, der Einführungsmechanismus (400) so konfiguriert ist, dass er sich in das Rohr erstreckt, und der Bördelwölbungsring (300) so konfiguriert ist, dass er umlaufend an einem Anschluss des Rohrs anliegt, wobei der Übertragungsmechanismus (200) einen Stützsitz (210), eine Übertragungsstange (220), eine kraftaufbringende Baugruppe (230) und eine Verbindungsbaugruppe (240) umfasst, wobei der Stützsitz (210) mit einer Führungshülse (211) versehen ist, die Führungshülse (211) in dem Bördelhohlraum (110) installiert ist, der Stützsitz (210) und das Installationsgehäuse (100) installiert sind und miteinander zusammenarbeiten, und die Übertragungsstange (220) ein Ende, das durch die Verbindungsbaugruppe (240) mit der kraftaufbringenden Baugruppe (230) verbunden ist, und das andere Ende aufweist, das durch die Führungshülse (211) verläuft, um mit dem Einführungsmechanismus (400) verbunden zu werden, **dadurch gekennzeichnet, dass** der Bördelwölbungsring (300) auf den Einführungsmechanismus (400) aufgeschoben ist, und dass der Einführungsmechanismus (400) eine Schutzabdeckung (410), eine Rohrgriffhülse und ein erstes elastisches Anschlagelement (430) umfasst, wobei die Rohrgriffhülse (420) mit der Führungshülse (211) verbunden ist, das erste elastische Anschlagelement (430) mit der Rohrgriffhülse (420) beweglich verbunden ist, eine Vielzahl von Fixierzahnschlitzen (421) an einer Seitenwand der Rohrgriffhülse entlang einer Umfangsrichtung der Rohrgriffhülse (420) vorgesehen sind, Fixierzähne (431), die den Fixierzahnschlitzen (421) entsprechen, an dem ersten elastischen Anschlagelement (430) entlang einer Umfangsrichtung des ersten elastischen Anschlagelements (430) vorgesehen sind, das erste elastische Anschlagelement (430) so konfiguriert ist, dass es elastisch an der Übertragungsstange (220) anliegt, und die Schutzabdeckung (410) auf das erste elastische Anschlagelement (430) aufgeschoben ist.

2. Rohrbördelvorrichtung nach Anspruch 1, wobei der Einführungsmechanismus (400) ferner einen ersten Bördelsitz (440) umfasst, der Übertragungsmechanismus (200) ferner ein erstes Befestigungsmittel (250) umfasst, der Bördelwölbungsring (300) auf dem ersten Bördelsitz (440) montiert ist, der erste Bördelsitz (440) beweglich auf die Führungshülse (211) aufgeschoben ist, eine streifenförmige Öffnung (212) an der Führungshülse (211) in axialer Richtung der Führungshülse (211) vorgesehen ist, ein erstes Fixierloch, das fest mit dem ersten Befestigungsmittel (250) zusammenarbeitet, an dem ersten Bördelsitz (440) vorgesehen ist, die Übertragungsstange (220) mit einem zweiten Fixierloch versehen ist, das fest mit dem ersten Befestigungsmittel (250) zusammenarbeitet, das zweite Fixierloch der streifenförmigen Öffnung (212) in der Position entspricht und der erste Bördelsitz (440) fest mit der Übertragungsstange (220) durch das erste Befestigungsmittel (250) zusammenarbeitet.

3. Rohrbördelvorrichtung nach Anspruch 1, wobei der Einführungsmechanismus (400) ferner einen zweiten Bördelsitz (450) umfasst, eine Vielzahl von Fixierelementen (451) an dem zweiten Bördelsitz (450) in Abständen entlang einer Umfangsrichtung des zweiten Bördelsitzes (450) angeordnet sind, der Stützsitz (210) mit einem Montageloch versehen ist, durch das das Fixierelement (451) hindurchgehen kann, der Bördelwölbungsring (300) am zweiten Bördelsitz (450) montiert ist, der zweite Bördelsitz (450) beweglich auf die Führungshülse (211) aufgeschoben ist, und das Fixierelement (451) fest mit der Verbindungsbaugruppe (240) zusammenwirkt.

4. Rohrbördelvorrichtung nach Anspruch 1, wobei der Einführungsmechanismus (400) eine Pufferhülse (460), ein zweites elastisches Anschlagelement (470) und einen Pufferring (480) umfasst, wobei das zweite elastische Anschlagelement (470) beweglich mit der Führungshülse (211) verbunden ist, das zweite elastische Anschlagelement (470) so konfiguriert ist, dass es elastisch an der Übertragungsstange (220) anliegt, die Pufferhülse (460) und der Pufferring (480) beide auf das zweite elastische Anschlagelement (470) aufgeschoben sind, und sowohl die Pufferhülse (460) als auch der Pufferring (480) so konfiguriert sind, dass sie an einer Rohrwand des Rohrs anliegen.

5. Rohrbördelvorrichtung nach Anspruch 1, wobei die Rohrbördelvorrichtung ferner einen ersten Positionierungssitz (500) umfasst, wobei der erste Positionierungssitz (500) innerhalb des Installationsgehäuses (100) installiert ist, eine Endfläche des ersten Positionierungssitzes (500) so konfiguriert ist, dass sie an einem Anschluss des Rohrs anliegt, der erste Positionierungssitz (500) mit einem ersten Anpassungsanschluss (510) versehen ist, durch den der Einführungsmechanismus (400) hindurchgehen kann, ein Ende des ersten Positionierungssitzes (500) mit einem ersten Anschlagabschnitt (520) versehen ist, das Installationsgehäuse (100) mit einem zweiten Anschlagabschnitt (120) versehen ist, der an dem ersten Anschlagabschnitt (520) anliegt und mit diesem zusammenwirkt, wobei, nachdem der Stützsitz (210) und das Installationsgehäuse (100) durch Ummantelung fixiert sind, eine Oberfläche des ersten Anschlagabschnitts (520) und der Stützsitz (210) aneinander anliegen und die andere Oberfläche des ersten Anschlagabschnitts (520) und der zweite Anschlagabschnitt (120) aneinander anliegen.

6. Rohrbördelvorrichtung nach Anspruch 1, wobei die Rohrbördelvorrichtung ferner einen zweiten Positionierungssitz (600) umfasst, wobei der zweite Positionierungssitz (600) innerhalb des Installationsgehäuses (100) installiert ist, eine Endfläche des zweiten Positionierungssitzes (600) so konfiguriert ist, dass sie an einem Anschluss des Rohrs anliegt, der zweite Positionierungssitz (600) mit einem zweiten Anpassungsanschluss (610) versehen ist, durch den der Einführungsmechanismus (400) passieren kann, der zweite Positionierungssitz (600) mit einem Begrenzungselement (620) versehen ist, ein erstes Gewinde entlang einer Umfangsrichtung des Installationsgehäuses (100) vorgesehen ist, ein zweites Gewinde entlang einer Umfangsrichtung des zweiten Positioniersitzes (600) vorgesehen ist, der Stützsitz (210) mit einer an das Begrenzungselement (620) angepassten Begrenzungsöffnung (214) versehen ist, das Begrenzungselement (620) durch die Begrenzungsöffnung (214) entlang einer axialen Richtung des Installationsgehäuses (100) verläuft und mit der Verbindungsbaugruppe verbunden ist, und das erste Gewinde mit dem zweiten Gewinde durch Verschraubung zusammengebracht ist.

7. Rohrbördelvorrichtung nach Anspruch 6, wobei ein Skalenmarkierungsloch (130) zum Messen einer Tiefenposition des zweiten Positionierungssitzes (600) im Installationsgehäuse (100) entlang einer axialen Richtung des Installationsgehäuses (100) vorgesehen ist.

8. Rohrbördelvorrichtung nach einem der Ansprüche 1 bis 7, wobei die kraftaufbringende Baugruppe (230) einen ersten kraftaufbringenden Arm (231), einen zweiten kraftaufbringenden Arm (232), ein rotierendes Element (233) und ein Kraftübertragungselement (234) umfasst, wobei der erste kraftaufbringende Arm (231) und der zweite kraftaufbringende Arm (232) durch das rotierende Element (233) drehbar miteinander zusammenwirken, wobei der erste kraftaufbringende Arm (231) fest mit dem Stützsitz (210) zusammenwirkt, der erste kraftaufbringende Arm (231) mit einem Montageloch (213) versehen ist, und das Kraftübertragungselement (234) ein Ende, das mit dem zweiten kraftaufbringenden Arm (232) verbunden ist, und das andere Ende aufweist, das durch das Montageloch (213) mit der Verbindungsbaugruppe (240) verbunden ist.

## Revendications

1. Dispositif d'évasement de tuyau comprenant un logement d'installation (100), un mécanisme de transmission (200), une bague convexe d'évasement (300) et un mécanisme d'introduction (400), dans lequel le logement d'installation (100) est doté d'une cavité d'évasement (110) permettant l'insertion d'un tuyau, le mécanisme d'introduction (400) est situé dans la cavité d'évasement (110), le mécanisme d'introduction (400) est raccordé au mécanisme de transmission (200), le mécanisme de transmission (200) est configuré pour entraîner le mécanisme d'introduction (400) en déplacement dans la cavité d'évasement (110), le mécanisme d'introduction (400) est configuré pour s'étendre dans le tuyau, et la bague convexe d'évasement (300) est configurée pour venir en butée de manière circonférentielle contre un orifice du tuyau, dans lequel le mécanisme de transmission (200) comprend un siège de support (210), une tige de transmission (220), un ensemble d'application de force (230) et un ensemble de raccordement (240), dans lequel le siège de support (210) est doté d'un manchon de guidage (211), le manchon de guidage (211) est installé dans la cavité d'évasement (110), le siège de support (210) et le logement d'installation (100) sont installés et coopèrent l'un avec l'autre, et la tige de transmission (220) présente une extrémité qui est raccordée à l'ensemble d'application de force (230) par l'intermédiaire de l'ensemble de raccordement (240), et l'autre extrémité qui passe à travers le manchon de guidage (211) pour être raccordée au mécanisme d'introduction (400), **caractérisé en ce que** la bague convexe d'évasement (300) est emmanchée sur le mécanisme d'introduction (400), et **en ce que** le mécanisme d'introduction (400) comprend un couvercle de protection (410), un manchon de préhension de tuyau et un premier organe de butée élastique (430), dans lequel le manchon de préhension de tuyau (420) est raccordé au manchon de guidage (211), le premier organe de butée élastique (430) est raccordé de manière mobile au manchon de préhension de tuyau (420), une pluralité de fentes de dents de fixation (421) sont ménagées sur une paroi latérale du manchon de préhension de tuyau le long d'une direction circonférentielle du manchon de préhension de tuyau (420), des dents de fixation (431) correspondant aux fentes de dents de fixation (421) sont prévues sur le premier organe de butée élastique (430) le long d'une direction circonférentielle du premier organe de butée élastique (430), le premier organe de butée élastique (430) est configuré pour venir en butée de manière élastique contre la tige de transmission (220), et le couvercle de protection (410) est emmanché sur le premier organe de butée élastique (430).

2. Dispositif d'évasement de tuyau selon la revendication 1, dans lequel le mécanisme d'introduction (400) comprend en outre un premier siège d'évasement (440), le mécanisme de transmission (200) comprend en outre une première fixation (250), la bague convexe d'évasement (300) est montée sur le premier siège d'évasement (440), le premier siège d'évasement (440) est emmanché de manière mobile sur le manchon de guidage (211), une ouverture en forme de bande (212) est ménagée sur le manchon de guidage (211) dans une direction axiale du manchon de guidage (211), un premier trou de fixation qui coopère de manière fixe avec la première fixation (250) est ménagé sur le premier siège d'évasement (440), la tige de transmission (220) est dotée d'un deuxième trou de fixation qui coopère de manière fixe avec la première fixation (250), la position du deuxième trou de fixation correspond à celle de l'ouverture en forme de bande (212), et le premier siège d'évasement (440) coopère de manière fixe avec la tige de transmission (220) par l'intermédiaire de la première fixation (250).

3. Dispositif d'évasement de tuyau selon la revendication 1, dans lequel le mécanisme d'introduction (400) comprend en outre un deuxième siège d'évasement (450), une pluralité d'organes de fixation (451) sont disposés sur le deuxième siège d'évasement (450) à intervalles le long d'une direction circonférentielle du deuxième siège d'évasement (450), le siège de support (210) est doté d'un trou de montage permettant le passage de l'organe de fixation (451), la bague convexe d'évasement (300) est montée sur le deuxième siège d'évasement (450), le deuxième siège d'évasement (450) est emmanché de manière mobile sur le manchon de guidage (211), et l'organe de fixation (451) coopère de manière fixe avec l'ensemble de raccordement (240).

4. Dispositif d'évasement de tuyau selon la revendication 1, dans lequel le mécanisme d'introduction (400) comprend un manchon butoir (460), un deuxième organe de butée élastique (470) et une bague butoir (480), dans lequel le deuxième organe de butée élastique (470) est raccordé de manière mobile au manchon de guidage (211), le deuxième organe de butée élastique (470) est configuré pour venir en butée de manière élastique contre la tige de transmission (220), le manchon butoir (460) et la bague butoir (480) sont tous deux emmanchés sur le deuxième organe de butée élastique (470), et le manchon butoir (460) et la bague butoir (480) sont tous deux configurés pour venir en butée contre une paroi de tuyau du tuyau.

5. Dispositif d'évasement de tuyau selon la revendication 1, dans lequel le dispositif d'évasement de tuyau comprend en outre un premier siège de positionnement (500), dans lequel le premier siège de positionnement (500) est installé à l'intérieur du logement d'installation (100), une surface d'extrémité du premier siège de positionnement (500) est configurée pour venir en butée contre un orifice du tuyau, le premier siège de positionnement (500) est doté d'un premier orifice d'adaptation (510) permettant le passage du mécanisme d'introduction (400), une extrémité du premier siège de positionnement (500) est dotée d'une première partie de butée (520), le logement d'installation (100) est doté d'une deuxième partie de butée (120) qui vient en butée contre la première partie de butée (520) et coopère avec celle-ci, dans lequel après que le siège de support (210) et le logement d'installation (100) sont fixés par manchonnage, une surface de la première partie de butée (520) et le siège de support (210) viennent en butée l'un contre l'autre, et l'autre surface de la première partie de butée (520) et la deuxième partie de butée (120) viennent en butée l'une contre l'autre.

6. Dispositif d'évasement de tuyau selon la revendication 1, dans lequel le dispositif d'évasement de tuyau comprend en outre un deuxième siège de positionnement (600), dans lequel le deuxième siège de positionnement (600) est installé à l'intérieur du logement d'installation (100), une surface d'extrémité du deuxième siège de positionnement (600) est configurée pour venir en butée contre un orifice du tuyau, le deuxième siège de positionnement (600) est doté d'un deuxième orifice d'adaptation (610) permettant le passage du mécanisme d'introduction (400), le deuxième siège de positionnement (600) est doté d'un organe de limitation (620), un premier filetage est prévu le long d'une direction circonférentielle du logement d'installation (100), un deuxième filetage est prévu le long d'une direction circonférentielle du deuxième siège de positionnement (600), le siège de support (210) est doté d'une ouverture de limitation (214) adaptée à l'organe de limitation (620), l'organe de limitation (620) passe à travers l'ouverture de limitation (214) le long d'une direction axiale du logement d'installation (100) et est raccordé à l'ensemble de raccordement, et le premier filetage est adapté par filetage au deuxième filetage.

7. Dispositif d'évasement de tuyau selon la revendication 6, dans lequel un trou de graduation (130) pour mesurer une position de profondeur du deuxième siège de positionnement (600) dans le logement d'installation (100) est ménagé le long d'une direction axiale du logement d'installation (100).

8. Dispositif d'évasement de tuyau selon l'une quelconque des revendications 1 à 7, dans lequel l'ensemble d'application de force (230) comprend un premier bras d'application de force (231), un deuxième bras d'application de force (232), un organe rotatif (233) et un organe de transmission de force (234), dans lequel le premier bras d'application de force (231) et le deuxième bras d'application de force (232) coopèrent de manière rotative l'un avec l'autre par le biais de l'organe rotatif (233), le premier bras d'application de force (231) coopère de manière fixe avec le siège de support (210), le premier bras d'application de force (231) est doté d'un trou d'assemblage (213), et l'organe de transmission de force (234) présente une extrémité raccordée au deuxième bras d'application de force (232), et l'autre extrémité qui est raccordée à l'ensemble de raccordement (240) à travers le trou d'assemblage (213).
